# EUROPEAN PATENT APPLICATION

(11) **EP 2 113 427 A2**
(43) Date of publication of application: **04.11.2009**
(21) Application number: 09159103.2
(22) Date of filing: 29.04.2009
(51) Int. Cl.: B60R 21/02

(54) **Vehicle with Adjustable Partition Wall**

(30) Priority: 02.05.2008 GB 0807988
(71) Applicant: Nissan Motor Manufacturing (UK) Ltd., Cranfield, Bedfordshire MK43 0DB (GB)
(72) Inventor: Swanepoel, Gary, Nissan Motor Manufacturing (UK) Ltd., Cranfield, Bedfordshire MK43 0DB (GB)
(74) Representative: Holmes, Matthew William

(57) **Abstract**

A vehicle comprising a vehicle floor (22), a front cabin (12), a rear luggage compartment (14) and left- and right-side roof rails (26L, 26R) provided on the interior roof (23) of the vehicle. A partition wall (16) separates the front cabin (12) from the rear luggage compartment (14), the partition wall (16) being pivotally mounted relative to an upright position. The partition wall (16) is provided with latching means (40L, 40R) which cooperate with the left- and right-side roof rails (26L, 26R) to latch the partition wall (16) in the upright position and at least one tilt position.

## Description

### Field of the Invention

The invention relates to a vehicle having an adjustable partition wall to separate front and rear areas of the vehicle interior. In particular, the invention relates to a vehicle having an adjustable partition wall to separate the front driver's cabin of the vehicle from a rear luggage compartment of the vehicle.

### Background to the Invention

It is known in vehicles, particularly vans, to provide a partition wall behind the front driver's cabin to separate the cabin from the rear luggage or cargo compartment. In order to improve the comfort of the driver and/or passenger, it is known to make the partition wall adjustable so that the space available behind the cabin seating can be increased when the driver and/or passenger wish to recline their seats. On the other hand, if particularly large luggage is to be carried in the rear luggage compartment, the wall can be moved into a position which maximises the luggage compartment volume, albeit at the expense of restricting manoeuvrability of the seats.

US7,140,656 describes a vehicle in which the partition wall is formed in two sections, an upper section and a lower section, with the upper section pivotally mounted to the lower section by means of a hinge that extends transversely across the vehicle width. The lower section is fixed, along its lower edge, to the vehicle floor, and on its left and right sides to a respective one of the vehicle sidewalls.

The rear luggage compartment is bounded by left and right vehicle sidewalls, doors to the rear and the partition wall to the front. As the upper section of the wall is able to pivot relative to the lower section, the available space for storing luggage within the compartment can be varied by adjusting the degree of tilt of the upper section of the wall relative to the lower section. The partition wall is connected, on its upper edge, to the interior roof of the luggage compartment via a ratchet mechanism. The ratchet mechanism consists of a first rack in attachment with the roof and a second rack in attachment with the partition wall. A handle allows the driver to disengage the second rack from the first rack when it is required to tilt the wall by pulling on the handle. When the partition wall has been tilted by the desired amount, the handle is released and the racks engage to lock the partition wall in place.

When carrying large luggage, the partition wall can be tilted into a relatively upright position to maximise the storage space available in the rear compartment, but when carrying smaller or no luggage the partition wall can be tilted into a relatively reclined position to allow the driver and/or passenger to recline their seats into more comfortable positions.

US6,474,713 describes another vehicle fitted with an adjustable partition wall between the front driver cabin and the rear luggage compartment. In this case the wall includes a lower frame which is fixed to the vehicle roof, sidewalls and floor and an upper removable wall section which is latched at its upper surface to the fixed frame and, when pivoted rearwards, can be removed from the frame altogether.

The aforementioned vehicles suffer from disadvantages. In US7,140,656, the ratchet mechanism that permits adjustment of the angle of tilt of the partition wall is complex. Furthermore, the vehicle roof is prone to damage due to twisting in the event of a sudden loading of the wall, for example due to shifting luggage in the rear compartment. US6,474,713 has the disadvantage that the movable section of the partition wall must be removed from the fixed lower partition wall completely to enable the seats of the front cabin to be reclined. This requires the user to remove the movable section of the wall from the vehicle completely or secure it in the luggage compartment until it is next required.

It is an aim of the present invention to address this issue and to improve upon known technology. Embodiments of the invention may provide an improvement to the vehicles known in the prior art whilst still providing a compromise between drive comfort and available luggage space in the rear luggage compartment of the vehicle. Other aims and advantages of the invention will become apparent from the following description, claims and drawings.

### Summary of Invention

According to a first aspect of the invention there is provided a vehicle comprising a vehicle floor, a front cabin, a rear luggage compartment, left- and right-side structural members provided at the left and right sides, respectively, of the vehicle, and a partition wall separating the front cabin from the rear luggage compartment, the partition wall being pivotally mounted relative to the vehicle floor so as to allow the partition wall to tilt relative to an upright position. The partition wall is provided with latching means which cooperate with the left- and right-side structural members to latch the partition wall in the upright position and/or at least one tilt position.

The invention provides the advantage that the latching means for the partition wall is carried by the left- and right-side structural members themselves so there is no need for additional latching parts to be provided on the vehicle to enable fitting of the adjustable partition wall. In addition, as the latching means cooperate with both the left- and right-side structural members, the risk of distortion to adjacent components is substantially reduced.

In an embodiment, the left- and right-side structural members comprise left- and right-side roof rails provided on the interior roof of the vehicle. Alternatively, or in addition, the left- and right-side structural members may comprise, respectively, left- and right-side pillars and/or left- and right-side waist rails of the vehicle.

The latching means may include a left-side latching member carried by the partition wall which cooperates with the left-side roof rail and a right-side latching member carried by the partition wall which cooperates with the right-side roof rail.

The left-side roof rail may be provided with a left-side plate to define at least first and second latched positions for the left-side latching member and the right-side roof rail may be provided with a right-side plate to define at least first and second latched positions for the right-side latching member, wherein the first and second latched positions of the left- and right-side latching members correspond to the upright and the first tilt position of the partition wall, respectively.

Biasing means may be provided for each latching member to bias the latching member towards a latched position. If the partition wall is in the upright position, the latching members are biased into their first latched positions, whereas if the partition wall is in the first tilt position the latching members are biased into their second latched positions.

In one embodiment, the left-side plate is provided with at least first and second openings for receiving the left-side latching member when in its first and second latched position, respectively, and the right-side plate is provided with at least first and second openings for receiving the right-side latching member when in its first and second latched position, respectively. The first openings in the left- and right-side plates are substantially aligned with one another laterally across the vehicle and the second openings in the left- and right-side plates are substantially aligned with one another laterally across the vehicle.

In an embodiment the partition wall is able to tilt between the upright, the first tilt and a second tilt position. In this case the left- and right-side plates each include first, second and third openings for receiving the respective left- or right-side latching member when in a respective one of the latched positions. This gives the partition wall three possible positions, the upright position and two positions at which the wall is tilted relative to the upright position. Further tilt positions for the partition wall may be implemented by providing additional openings along the left- and right-side plates.

The latching means may further include a slider member associated with each of the left- and right-side roof rails, which is free to slide along the respective left- or right-side plate when the respective left- or right-side latching member is unlatched from the first and second openings.

Conveniently, a handle is provided which is operable to disengage the left- and right-side latching members simultaneously from the left- and right-side roof rails, respectively, so as to allow the partition wall to tilt.

The handle may be centrally mounted on the partition wall to enable ease of use by either a driver or passenger seated in the front cabin. In an embodiment, the handle (54) is operable from the front cabin (12) or the rear luggage compartment (14).

Advantageously, the partition wall is pivotally mounted on the vehicle floor by means of a hinge and the partition wall includes a hinge plate mounted at the base thereof to permit pivotal movement of the partition wall relative to the upright position. The hinge plate may include a first part which is mounted on the partition wall and a second part which is mounted to the vehicle floor.

Conveniently, the separation between (i) the upright position and the first tilt position of the partition wall and (ii) the first tilt position and the second tilt position is a few degrees and, more preferably, substantially equal.

In a still further embodiment, the invention includes means for biasing the partition wall into the upright position. This provides the advantage that when the user operates the handle to move between the first tilt position and the upright position, for example, he/she does not need to pull on the partition wall as the wall is urged back into the upright position under the force of the biasing means.

The vehicle may comprise a roof support structure and the latching means may comprise a further left side latching member which cooperates with a left side roof support structure and a further right side latching member which cooperates with a right side roof support structure.

According to a second aspect of the invention, there is provided a partition wall system for a vehicle, the partition wall system including a partition wall for separating a front cabin of the vehicle from a rear luggage compartment, a left-side plate for mounting to a left-side roof rail of the vehicle and a right-side plate for mounting to a right-side roof rail of the vehicle, each of the left- and right-side plates being provided with at least first and second openings for cooperation with a respective one of left- and right-side latching means which serve to latch the partition wall in an upright position and at least one tilt position, and pivot means for mounting the partition wall pivotally relative to the vehicle floor so as to allow the wall to tilt relative to the upright position.

The invention, therefore, also resides in a partition wall system which may be a retrofit to a vehicle after vehicle manufacture, for example for upgrade purposes.

Within the scope of this application it is envisaged that the various aspect, embodiments, examples, features and alternatives set out in the preceding paragraphs, in the claims and in the following description and drawings may be taken individually or in any combination.

### Brief Description of the Drawings

The invention will now be described, by way of example only, with reference to the accompanying drawings in which;
Figure 1 is a schematic diagram of a vehicle of a first embodiment of the invention, including an adjustable partition wall between the front cabin and the rear luggage-compartment;
Figure 2 is view from the rear of the partition wall in the vehicle in Figure 1, mounted to the roof cant rails and vehicle floor;
Figure 3 is an exploded view of the partition wall in Figure 2 to illustrate the construction in further detail;
Figure 4 is perspective view of the partition wall in Figures 2 and 3;
Figure 5 is a perspective view of a section of one of the roof cant rails to illustrate how the partition wall mounts to the rail; and
Figure 6 is a side view of the partition wall in Figure 2 to illustrate different positions of the wall.

### Detailed Description of Embodiments

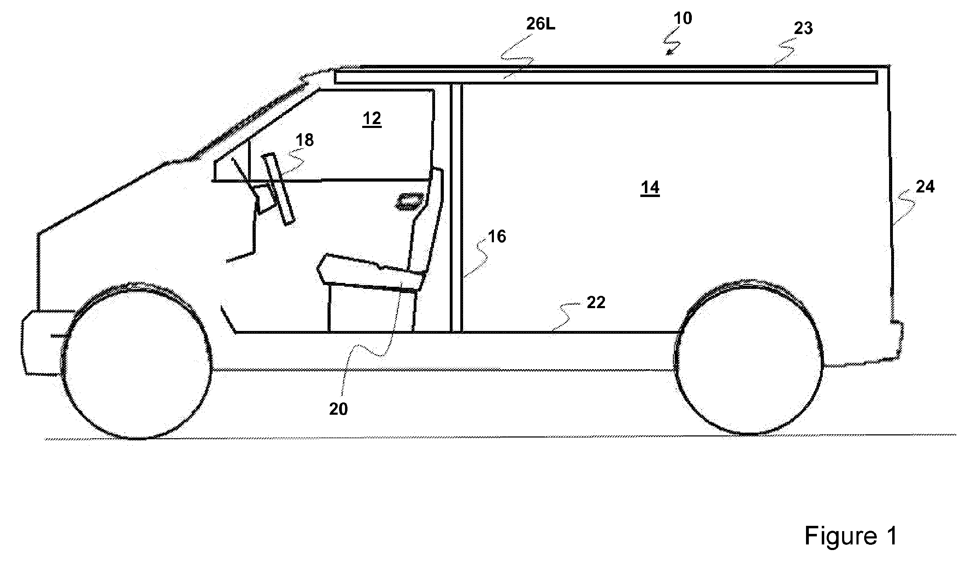

Referring to Figure 1, a vehicle 10 of a first embodiment of the invention includes a front cabin 12 and a rear luggage or cargo compartment 14 separated by an adjustable partition wall 16. The front cabin 12 is provided with the vehicle's steering wheel 18 and includes seating 20 for a driver and one or more passengers. The rear luggage compartment 14 is bounded by a vehicle floor 22, a vehicle roof 23, a rear vehicle door or doors 24 for accessing the luggage compartment, left and right sidewalls (not identified in Figure 1) and the partition wall 16 which separates the front cabin 12 from the rear luggage compartment 14. The roof 23 covers both the cabin 12 and the luggage compartment 14 and is bounded by a roof frame. The vehicle also includes structural members in the form of generally vertical A- B- and C-pillars (not shown) for supporting the roof frame in a conventional manner. Larger vehicles may include further pillars (e.g. D- and E-pillars).

The roof frame comprises a plurality of structural members including a first lateral member or header rail (not shown) which connects the upper ends of the A-pillars, a second lateral member (not shown) connecting the rearmost pillars (e.g. the C-pillars) which are typically used to support the rear door or doors 24 and two longitudinal members known as side roof rails or cant rails which run the length of the roof and connect the upper ends of each of the pillars along each side of the vehicle. In Figure 1, only the left-side cant rail 26L is visible, although a similar right-side cant rail is also provided on the right side of the vehicle. The structural members are typically formed using a box-section construction for strength with additional reinforcement panels to provide localised reinforcement where required. Hereinafter the cant rails will be referred to as roof rails.

Although not shown in the Figures, the vehicle may also include one or more further longitudinal structural members extending between the pillars, such as waist rails or other, intermediate height rails.

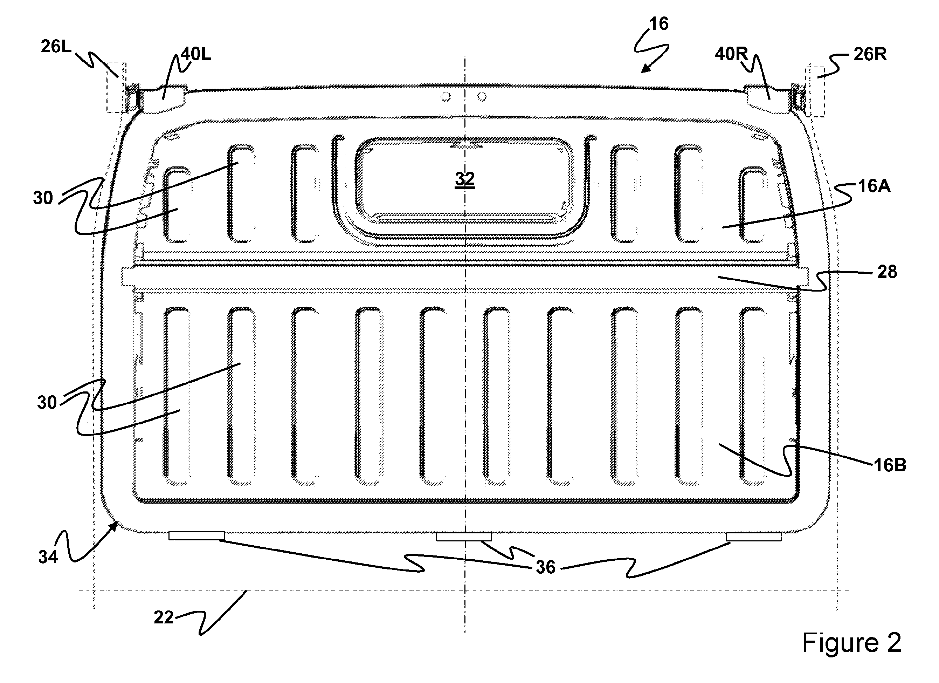

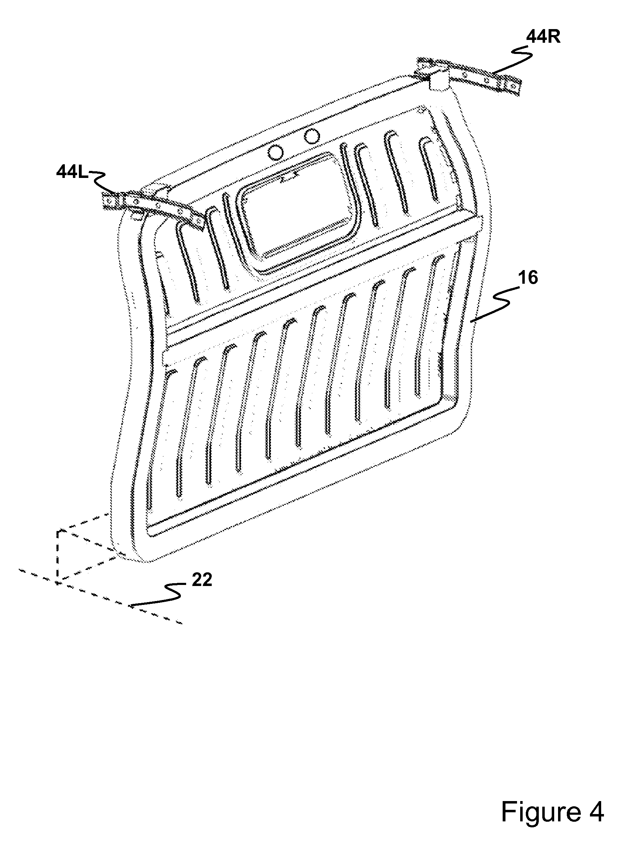

The partition wall 16 is shown in more detail in Figures 2 to 4. The partition wall 16 includes an upper panel 16A and a lower panel 16B separated by a reinforced central bar 28. Each of the panels 16A, 16B is provided with a plurality of strengthening ribs 30. The upper panel 16A also includes an opening 32 fitted with a window through which an occupant of the front cabin 12 is able to view the rear luggage compartment 14. In other embodiments (not shown), the opening 32 is provided with a wire grill or mesh, or alternatively the upper panel need not be provided with the opening at all.

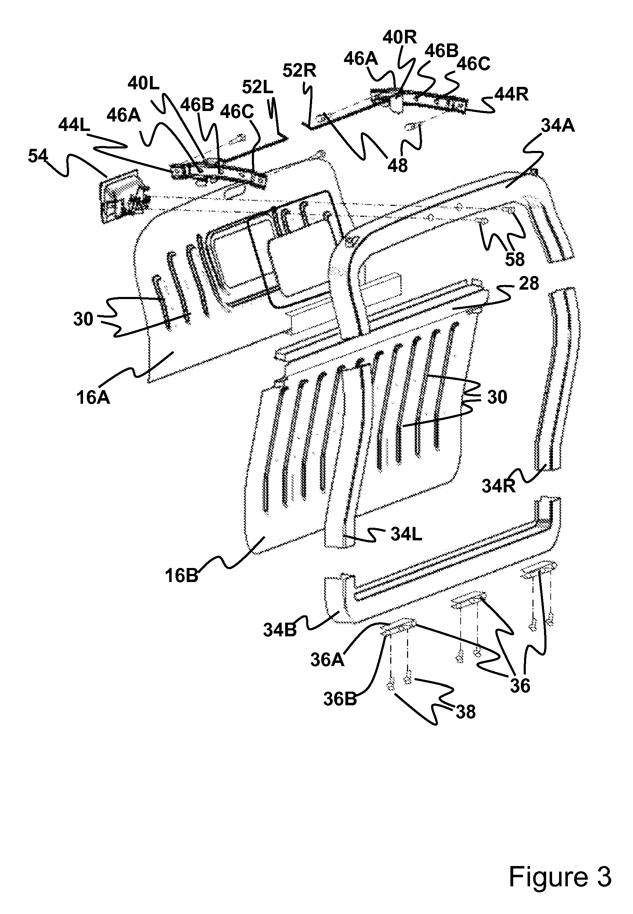

A reinforced perimeter section 34 surrounds the central panels 16A, 16B of the partition wall 16. As can be seen most clearly in Figure 3, the perimeter section is formed in four parts; an upper part of U-shaped cross section 34A, left- and right-side arms, 34L, 34R respectively, and a lower part of U-shaped cross-section 34B. The lower part 34B of the perimeter section 34 is provided with pivot means which permit the partition wall 16 to tilt back and forth, relative to an upright position, so as to adjust the angle of tilt of the partition wall 16 relative to the floor 22. The pivot means include first, second and third hinge plates 36, each having a first part 36A attached to the lower part 34B via a hinge pin (not shown) and a second part 36B attached to the vehicle floor 22. The hinge plates 36 are attached to the lower part 34B of the perimeter section of the partition wall 16 by means of bolts 38.

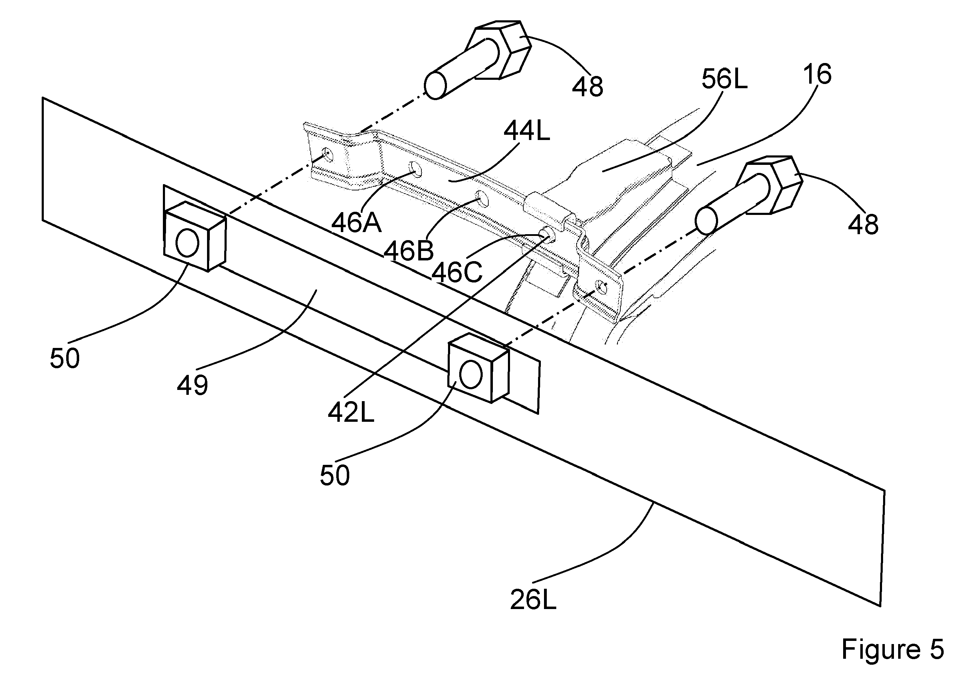

Latching means in the form of a latching arrangement 40L, 40R is mounted to a respective one of upper left and right corners of the upper part 34A of the perimeter section 34. Referring to Figure 5, the left-side latching arrangement 40L includes a left-side latch pin 42L which is operable between latched and unlatched positions. The latch pin 42L is spring-biased towards its latched position (as shown in Figure 5) by means of biasing springs (not shown) and is movable into an unlatched position by means of user action, as will be described in further detail below. The right-side latch pin 42R is identical to the left-side latch pin 42R and is biased and operated in a similar manner.

Figure 5 shows a section of the left-side roof rail 26L on the vehicle roof 23 carrying a slightly arcuate plate 44L punched with three equally spaced openings 46A, 46B, 46C. The left-side latch pin 42L can be received within any one of the three openings 46A, 46B, 46C. The plate 44L is secured firmly to the left-side roof rail 26L by means of nut 50 and bolt 48 pairs located one at either end of the plate 44L. The left-side roof rail 26L is provided with a reinforcement plate 49 through which bolts 48 are received, and a similar reinforcement plate is provided on the right-side roof rail. Preferably, the reinforcement plates are spot-welded to the roof rails.

A similar plate 44R is mounted to the right-side roof rail 26R in a similar manner (as can be seen in Figure 3) so that the positions of the openings 46A, 46B, 46C on the left- and right-side plates 44L, 44R align with one another laterally across the vehicle.

The openings 46A, 46B, 46C in the plates 44L, 44R define first, second and third latched positions for the associated latch pin 42L or 42R. Each latching arrangement also includes a slider 56L, 56R (only the left-side slider 56L is shown in Figure 5) having a jaw which cooperates with the respective plate 44L so as to slide along the plate 44L when the latch pin 42L is in an unlatched position.

Referring again to Figure 3, each latch pin 42L, 42R is connected with one end of a respective left- or right-side Bowden cable 52L, 52R, the other end of which connects with a user-operated handle 54. The handle 54 is mounted on the upper part 34A of the perimeter section of the partition wall 16, approximately centrally in the lateral direction, by means of bolts 58. The Bowden cables 52L, 52R are routed through the hollow upper part 34A of the perimeter section of the partition wall 16 between the latch pins 42L, 42R and the handle 54. Operating the handle 54 causes both the left- and right-side Bowden cables 52L, 52R to be pulled together, and substantially simultaneously, hence causing both latch pins 42L, 42R to move from their latched to their unlatched positions.

Depending on the purpose for which the vehicle is being used, it may be desirable to adjust the angle of tilt of the partition wall 16. If, for example, it is intended to carry a large load in the rear luggage compartment 14, it is preferable for the partition wall 16 to be in an upright position (as shown in Figures 1 and 2) so that the available space in the rear luggage compartment 14 is maximised. On the other hand, if less space is required for the purpose of carrying luggage, it is preferable for the partition wall 16 to be tilted rearwards so as to improve driver and passenger comfort by allowing the seating 20 in the front cabin 12 to be reclined slightly.

The manner in which the partition wall 16 can be pivoted between upright (first), middle (second) and rearmost (third) positions will now be described.

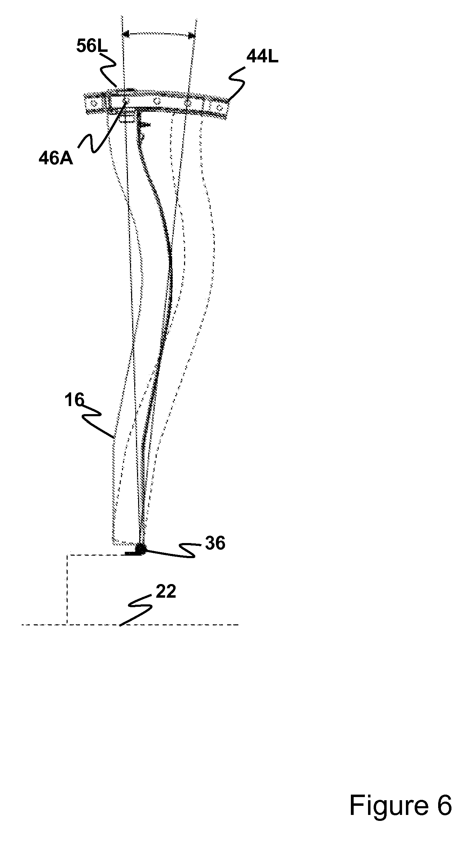

Referring to Figure 6, the upright position of the partition wall 16 is illustrated as a solid line. In this position the left-side latch pin 42L (not shown in Figure 6) is engaged within the first opening 46A of the left-side plate 44L (a first latched position) so that the left-side slider 56L is unable to slide relative to the left-side roof rail. Likewise, the right-side latch pin 42R is engaged within the first opening 46A of the right-side plate 44R (a first latched position) so that the right-side slider 56R is unable to slide relative to the right-side roof rail 26R. The partition wall 16 is therefore maintained in a secure, substantially upright position by virtue of the latching arrangements 40L, 40R being latched to their respective plates 44L, 44R.

When the user operates the handle 54 to pull on the Bowden cables 52L, 52R, the left- and right-side latch pins 42L, 42R are disengaged from their respective plates 44L, 44R together, against the biasing springs, so that the sliders 56L, 56R are free to slide rearwards along the plates 44L, 44R. If the user pushes the partition wall 16 rearwards at the same time as operating the handle 54, the sliders 56L, 56R travel along the plates 44L, 44R causing the partition wall 16 to pivot about the hinge plates 36 on the lower section 34B of the wall 16 so as to adjust its angle of tilt.

Once the user releases the handle 54, the force of the biasing springs acting on the latch pins 42L, 42R urges the pins back towards their plates 44L, 44R. If the user pushes the partition wall rearward by a few degrees and releases the handle 54, eventually each latch pin 42L, 42R engages within the second openings 46B in its respective plate 44L, 44R and the sliders 56L, 56R are prevented from sliding once again. As the sliders are prevented from sliding, the partition wall 16 is therefore locked or latched in the middle position.

If the user operates the handle 54 while pushing the partition wall 16 further rearward, each latch pin 42L, 42R is disengaged from the second opening 46B in its respective plate 44L, 44R, and the sliders 56L, 56R move further along the plates 44L, 44R so that the partition wall 16 tilts further rearward to lock into the rearmost position (shown as a dashed line in Figure 6).

Moving the partition wall 16 from the rearmost position to the upright or middle position is achieved in a similar manner by operating the handle 54 to disengage the latch pins 42L, 42R from the plates 44L, 44R and then applying a pulling force to the partition wall 16 to tilt it forwards through an appropriate amount. The user can therefore adjust the tilt angle of the partition wall 16 simply by operating the handle 54 to disengage/engage the latch pins 42L, 42R and pushing or pulling on the wall 16.

Typically, the angle of tilt between the upright position of the partition wall 16, as defined by the position of the first openings 46A on the plates 44L, 44R, and the rearmost position is between 5 to 10 degrees and, preferably, about 8 degrees. In this case, as the openings 46A, 46B, 46C on the plates 44L, 44R are equally spaced, the angle of tilt between the upright position of the wall 16 and the middle position of the wall 16 is about 4 degrees. The spacing between (i) the first openings 46A and the second openings 46B and (ii) the second openings 46B and the third openings 46C is equal and, therefore, the angle of tilt between (i) the upright position and the middle position and (ii) the middle position and the rearmost position, is equal.

Because the partition wall 16 is latched to the vehicle body via both the left- and right-side roof rails 26L, 26R, sudden loading of the wall (e.g. due to shifting luggage or cargo in the rear compartment) will be transmitted to the vehicle roof 23 through the roof rails 26L, 26R and the plates 44L, 44R on both sides of the vehicle and, thus, the roof will not require additional reinforcement to accommodate the adjustable partition wall 16. The invention is further advantageous because the wall 16 is latched to the vehicle body via existing components, in the form of the roof rails 26L, 26R, which are provided on the vehicle for other purposes (e.g. strengthening). As the latching arrangements 401, 40r cooperate with the roof rails through the plates 441, 44r, a cost-effective means of latching the wall in one of several positions is provided.

The provision of the reinforcement plates (e.g. left-side reinforcement plate 49 in Figure 5) on the roof rails 26L, 26R locally reinforces the roof frame so as to provide a sufficiently rigid mounting for the nuts 48 to prevent them being pulled through the rails when a force is applied to the partition wall 16.

It is a further benefit of the invention that the central mounting of the handle 54 provides ease of operability for the user. In other words, with the driver seated in the front cabin 12, it is a convenient operation to reach behind him/her and operate the handle 54 so as to release the partition wall 16. Likewise, a passenger is also able to access the handle 54 owing to its position approximately mid way between the driver and passenger seats.

An alternative embodiment of the invention (not shown) provides the partition wall with a biasing means for urging the wall into the upright position. In this case the user only needs to push the wall rearward when it is required to tilt the wall out of the upright position into the middle or rearmost position. In order to return the wall to the middle or upright position, the user releases the handle causing the latch pins to disengage from the openings and the wall is urged back to the middle or upright position under the spring force without the user having to applying a pulling force. This embodiment has the advantage that it requires less effort from the user to manoeuvre the wall and provides a quality-feel for the user.

In another embodiment of the invention (not shown) the vehicle is provided with two handles 54. As in the above-described embodiment, the first handle is mounted centrally on an upper portion of the front face of the partition wall so as to be accessible to the user from the cabin 12. The second handle is positioned so as to be accessible to users from the luggage or cargo compartment 14. Advantageously, the second handle is a feature provided on the back of the first handle 54 which protrudes through the partition wall 32 when installed. This arrangement takes the form of a double-sided handle assembly. Such an assembly serves to provide the user with a useful convenience feature whilst keeping the routing of the Bowden cables as simple as possible. In this way the user need not walk from the luggage compartment 14 to the cabin 12 during loading of the vehicle 10 if it is determined that the cargo will not fit in the luggage compartment 14 unless the bulkhead is moved to a more upright position. The double-sided handle assembly may be provided with a blocking feature to disable one of the handles to prevent inadvertent unlatching of the partition wall.

In a further embodiment of the present invention (not shown), the latch pins 42 are tapered at the end that engages with the arcuate plates 44. Tapering the engagement ends of the pins 42 serves to aid the location of the pin 42 in the hole 46 and greatly reduces the occurrence of rattles which could otherwise be caused by relative motion of the pin 42 in the hole 46 when the vehicle is in motion.

It will be appreciated that the cooperation of the left and right latching arrangements 40L, 40R with the left and right side roof rails as described above is merely one possibility and that the latching arrangements may instead be configured and arranged to cooperate with other left and right side structural members of the vehicle, for example a side pillar, a waist rail or an intermediate height rail. In another embodiment of the present invention (not shown), the partition wall is provided with two or more pairs of latching arrangements 40. In this embodiment, for example, an additional pair of latching arrangements is provided on the partition wall below the latching arrangements 40 at the top left and top right of the U-shaped cross section 34A. These lower latching arrangements are conveniently mounted to the partition wall on the reinforced central bar 28 and are actuated by the same handle 54 mounted to the partition wall using Bowden cables. The lower latching arrangements engage with a lower arcuate plate of a similar construction to that of the upper arcuate plates 44. These lower arcuate plates are mounted to or incorporated in the B pillar behind the driver and passenger seats. Typically the body of such vans is provided with tie-down or lashing points in the cargo area. These often take the form of reinforced eyes or tracks to which the user may anchor the cargo during transit. In some instances these lashing points are provided on a box section running along each side of the luggage compartment or cargo area and positioned approximately mid way between the floor and the roof of the luggage compartment. These longitudinally orientated box sections are known as waistrails serve as structural reinforcement for the vehicle cargo area and roof structure and would provide a suitable location for a lower pair of arcuate plates 44 if additional latching of the partition wall is required.

It will be appreciated that the aforementioned examples of the invention are not limiting and the scope of the invention is set out in the appended claims.

## Claims

1. A vehicle comprising:
a vehicle floor (22);
a front cabin (12);
a rear luggage compartment (14);
a partition wall (16) separating the front cabin (12) from the rear luggage compartment (14), the partition wall (16) being pivotally mounted relative to the vehicle floor (22) so as to allow the partition wall (16) to tilt relative to an upright position; and
left- and right-side structural members provided at the left and right sides, respectively, of the vehicle (10);
wherein the partition wall (16) is provided with latching means (40L, 40R) which cooperate with the left- and right-side structural members to latch the partition wall (16) in the upright position and/or at least one tilt position.

2. The vehicle as claimed in claim 1, wherein the latching means (40L, 40R) comprise a left-side latching member (42L) which cooperates with the left-side structural member and a right-side latching member (42R) which cooperates with the right-side structural member.

3. The vehicle as claimed in claim 2, wherein the left-side structural member is provided with a left-side plate (44L) to define at least first and second latched positions for the left-side latching member (42L), and the right-side structural member is provided with a right-side plate (44R) to define at least first and second latched positions for the right-side latching member (42R), wherein the first and second latched positions of the left- and right-side latching members (42L, 42R) correspond to the upright and a first tilt position of the partition wall (16), respectively.

4. The vehicle as claimed in claim 2 or claim 3, comprising biasing means for biasing each latching member (42L, 42R) towards a latched position.

5. The vehicle as claimed in claim 3 or claim 4, wherein the left-side plate (44L) is provided with at least first and second openings (46A, 46B, 46C) for receiving the left-side latching member (42L) when in its first and second latched positions, respectively, and the right-side plate (44R) is provided with at least first and second openings (46A, 46B, 46C) for receiving the right-side latching member (42R) when in its first and second latched positions, respectively, the first openings (46A) in the left- and right-side plates (44L, 44R) being substantially aligned with one another laterally across the vehicle and the second openings (46B) in the left- and right-side plates (44L, 44R) being substantially aligned with one another laterally across the vehicle.

6. The vehicle as claimed in any one of claims 3 to 5, wherein the latching means (40L, 40R) further comprise a slider member (56L, 56R) associated with each of the left- and right-side structural members which is free to slide along the respective left- or right-side plate (44L, 44R) when the respective left- or right-side latching member (42L, 42R) is unlatched from its first and second openings (46A, 46B, 46C).

7. The vehicle as claimed in any preceding claim comprising a handle (54) which is operable to disengage the latching means (40L, 40R) simultaneously from the left- and right-side structural members, respectively, so as to allow the partition wall (16) to tilt.

8. The vehicle as claimed in claim 7, wherein the handle (54) is centrally mounted on the partition wall (16).

9. The vehicle as claimed in claim 7 or claim 8, wherein the handle (54) is connected to one end of a left-side cable (52L) and to one end of a right-side cable (52R), the cables connecting, at their other ends, with the latching means (40L, 40R).

10. The vehicle as claimed in claim 9, wherein the handle (54) is operable from the front cabin (12) or the rear luggage compartment (14).

11. The vehicle as claimed in any preceding claim, wherein the partition wall (16) is pivotally mounted to the vehicle floor (22) by means of a hinge (36) and, wherein the partition wall (16) includes a hinge plate (36) mounted at the base (34B) thereof to permit pivotal movement of the partition wall (16) relative to the upright position.

12. The vehicle as claimed in any preceding claim, wherein the partition wall is pivotally mounted relative to the vehicle floor (22) so as to allow the partition wall (16) to tilt between the upright position, a first tilt position and a second tilt position.

13. The vehicle as claimed in any preceding claim, comprising a roof support structure, wherein the latching means comprises a further left side latching member which cooperates with a left side roof support structure and a further right side latching member which cooperates with a right side roof support structure.

14. The vehicle as claimed in any preceding claim wherein the left- and right-side structural members comprise, respectively, left- and right-side roof rails (26L, 26R), left- and right-side pillars and/or left- and right-side waist rails.

15. A partition wall system for a vehicle (10) as claimed in any one of claims 1 to 16, the partition wall system including a partition wall (16) for separating a front cabin (12) of the vehicle (10) from a rear luggage compartment (14) of the vehicle (10), a left-side plate (44L) for mounting to a left-side structural member of the vehicle and a right-side plate (44R) for mounting to a right-side structural member of the vehicle, each of the left- and right-side plates (44L, 44R) being provided with at least first and second openings (46A, 46B, 46C) for cooperation with a respective one of left- and right-side latching means (40L, 40R) which serve to latch the partition wall (16) in an upright position and at least one tilt position, and pivot means (36) for mounting the partition wall (16) pivotally relative to the vehicle floor (22) so as to allow the partition wall (16) to tilt relative to the upright position.
